Europäisches Patentamt

European Patent Office

Office européen des brevets

(11) Numéro de publication: **0 268 326**
**A2**

## (12) DEMANDE DE BREVET EUROPEEN

(21) Numéro de dépôt: **87202162.1**

(22) Date de dépôt: **06.11.87**

(51) Int. Cl.⁴: **B06B 3/04** , **G10K 11/00** , **//B29C65/08,B23K20/10**

(30) Priorité: **18.11.86 BE 217426**

(43) Date de publication de la demande:
**25.05.88 Bulletin 88/21**

(84) Etats contractants désignés:
**AT BE CH DE ES FR GB GR IT LI LU NL SE**

(71) Demandeur: **UNDATIM ULTRASONICS**
**Avenue Brugmann 290**
**B-1180 Bruxelles(BE)**

(72) Inventeur: **Cordemans de Meulenaer, Eric Denis**
**Hertogenweg 26**
**B-1970 Wezembeek-Oppem(BE)**
Inventeur: **Hannecart, Baudouin Oscar**
**Nisramont 30**
**B-6980 La Roche en Ardenne(BE)**

(74) Mandataire: **Thirion, Robert et al**
**Bureau GEVERS S.A. rue de Livourne 7 bte 1**
**B-1050 Bruxelles(BE)**

(54) **Procédé et installation pour la mise en oeuvre d'un dispositif vibrateur électroacoustique.**

(57) Procédé d'utilisation d'un dispositif vibrateur électroacoustique (1) monté sur un support (2) et destiné notamment à l'usinage et à la soudure de pièces, consistant à modifier, en cours d'utilisation du dispositif vibrateur électroacoustique, la position de ce dernier par rapport à son support pour que la zone de fixation (3) dudit dispositif sur ce support coïncide sensiblement avec un noeud de vibrations et installation pour la mise en oeuvre de ce procédé.

Fig.1.

EP 0 268 326 A2

## "Procédé et installation pour la mise en oeuvre d'un dispositif vibrateur électroacoustique."

La présente invention a pour objet un procédé d'utilisation d'un dispositif vibrateur électroacoustique monté sur un support et destiné notamment à l'usinage et à la soudure de pièces.

On sait que le rendement d'un dispositif vibrateur électroacoustique est d'autant meilleur que ses oscillations sont libres et on sait également que l'on ne peut obtenir ce résultat qu'en fixant le dispositif vibrateur sur son support à l'endroit d'un des noeuds de vibrations.

En cours d'utilisation du dispositif vibrateur, la position de la plupart de ces noeuds varie.

Jusqu'à présent, pour obtenir un rendement relativement satisfaisant du dispositif vibrateur, la fréquence de vibration dudit dispositif vibrateur ne pouvait varier que dans une plage très limitée à partir d'une fréquence de référence du fait de la position fixe du dispositif vibrateur par rapport à son support. Cette façon de faire présente l'inconvénient de ne permettre qu'une utilisation sur une largeur de bande réduite avec une perte notable de rendement électroacoustique.

L'invention a pour but de remédier à cet inconvénient et de procurer un procédé d'utilisation d'un dispositif vibrateur électroacoustique pour que celui-ci fonctionne avec un haut rendement et ce, de manière constante. Ce qui est particulièrement important du fait que la mise en oeuvre dudit dispositif, d'une manière rapide et avec le plus haut rendement possible, s'adresse notamment à des matériaux durs et cassants ou particulièrement lents à travailler.

A cet effet, suivant l'invention, ledit procédé consiste à modifier, en cours d'utilisation du dispositif vibrateur électroacoustique, la position de ce dernier par rapport à son support pour que la zone de fixation dudit dispositif sur ce support coïncide sensiblement avec un noeud de vibrations.

L'invention a également pour objet une installation pour la mise en oeuvre du procédé susdit.

Suivant l'invention, cette installation comprend un support portant un dispositif vibrateur électroacoustique, des moyens de fixation dudit dispositif sur le support qui sont agencés de manière à permettre une modification de position relative du dispositif vibrateur par rapport à son support et des moyens pour analyser la fréquence de vibration du dispositif vibrateur et pour piloter la position du dispositif vibrateur par rapport à son support.

D'autres détails et particularités de invention ressortiront de la description des dessins annexés au présent mémoire et qui illustrent et représentent, à titre d'exemples non limitatifs, le procédé susdit ainsi que deux formes de réalistion particulières de l'installation suivant l'invention.

La figure 1 est une vue schématique, en élévation, en coupe et avec brisures partielles, des moyens de support et de fixation du dispositif vibrateur électroacoustique suivant l'invention.

La figure 2 est une vue analogue à la figure 1 et illustre une variante des moyens de support et de fixation du dispositif vibrateur montrés à ladite figure 1.

La figure 3 est une vue en coupe et en plan correspondant à la figure 2.

Dans les différentes figures, les mêmes notations de référence désignent des éléments identiques ou analogues.

Comme illustré aux dessins, le procédé suivant l'invention vise, en cours d'utilisation du dispositif vibrateur électroacoustique 1, à modifier sa position par rapport à son support 2 pour que la zone de fixation 3 du dispositif 1 audit support 2 coïncide sensiblement avec un noeud de vibrations et ce, de manière à placer le dispositif dans des conditions de travail idéales pendant toute la durée de son utilisation.

Pour ce faire, on détecte la fréquence de vibration de résonance du dispositif vibrateur 1 et lorsqu'un écart de valeur prédéterminée de cette fréquence est constaté, ce qui correspond en fait à un déplacement du noeud de vibrations, on immobilise, en 4 et à l'extérieur de la zone 3 de fixation, le dispositif vibrateur 1 par rapport au support 2. On rend alors la zone de fixation 3 mobile par rapport au dispositif vibrateur 1 tout en conservant avec ce dernier un engagement d'entraînement suivant son axe longitudinal 5. Sur la base de l'écart de fréquence constaté, on déplace la zone de fixation 3 le long du dispositif 1 et suivant l'axe 5, dans la direction de la nouvelle position du noeud de vibrations. Lorsque cette nouvelle position coïncide avec celle de la zone de fixation 3, cette dernière est rendue solidaire du dispositif 1 et du support 2, tandis que le dispositif 1 est alors libéré en 4.

Pour permettre l'adaptation de la position de la zone de fixation 3 à celle d'un noeud de vibrations, on doit déterminer la fréquence de référence correspondant à la fixation du dispositif vibrateur 1 à l'endroit de ce noeud. En cours d'utilisation du dispositif 1, on analyse avantageusement en continu la fréquence de vibration de résonance, on compare celle-ci à la fréquence de référence que l'on a déterminée et on utilise le résultat de la comparaison pour modifier la zone de fixation 3 du dispositif 1 par rapport au support 2 pour la mettre en concordance avec le noeud de vibrations précité.

Pour déterminer la fréquence de référence, on analyse le circuit électrique équivalent du dispositif vibrateur 1 pour en déterminer l'impédance minimum. On enregistre alors la fréquence correspondante constituant la fréquence de référence qu'on utilise pour effectuer un déplacement de la zone de fixation vers le noeud de vibrations correspondant.

Lors de variations de position du support 2, on peut détecter le contact du dispositif vibrateur 1 et de le pièce à usiner grâce à la variation d'impédance en résultant dans le circuit électrique équivalent du dispositif vibrateur 1.

L'installation, suivant l'invention et partiellement repésentée aux dessins, pour la mise en oeuvre du procédé susdit, comprend le support 2 portant le dispositif électroacoustique 1, des moyens de fixation 6 dudit dispositif 1 sur le support 2 qui sont agencés de manière à permettre une modification de position du dispositif vibrateur 1 par rapport au support 2 et des moyens, non représentés et constitués de composants électroniques connus en soi, pour analyser la fréquence de vibration du dispositif vibrateus 1 et pour piloter la position de ce dernier par rapport à son support 2.

Ces moyens de fixation 6 comprennent des organes 7', fixes par rapport au support 2, agencés à l'écart de la zone de fixation 3 et constitués par des mâchoires 7 enserrant le dispositif vibrateur 1, sous l'action de vérins 8, pour immobiliser temporairement celui-ci par rapport au support 2 lors d'une modification de la position de la zone de fixation 3. Ces moyens 6 comprennent également des organes mobiles 9 par rapport au support 2, qui seront décrits ci-après, qui sont angecés pour se déplacer par rapport à ce support 2 et par rapport au dispositif vibrateur pour venir se placer sensiblement à l'endroit du noeud de vibrations susdit, les moyens 6 comprenant avantageusement des moyens de blocage 10, commandés par des vérins 11, agencés pour prendre appui sur les organes mobiles 9 pour les immobiliser par rapport au support 2 lorsque ces organes 9 occupent leur position correspondant à la position de travail du dispositif vibrateur électroacoustique 1.

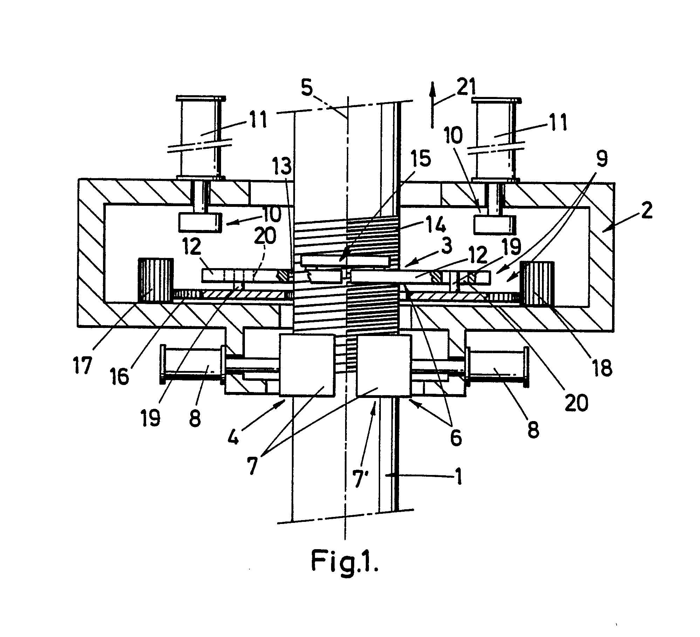

Dans la forme de réalisation illustrée à la figure 1, les organes mobiles 9 susdits sont constitués par deux mâchoires 12 destinées à entourer le dispositif vibrateur 1 et dont la zone 13 est taraudée pour coopérer avec une zone filetée 14 du dispositif 1. Ces organes 9 comprennent également des moyens 15, tels que vérins, agencés pour écarter les mâchoires 12 l'une de l'autre d'une distance telle que le dispositif vibrateur est libéré des mâchoires 12 et que ces dernières peuvent se déplacer en suivant le filet de la zone 14, sous l'action d'une couronne dentée 16, entraînéeé par un pignon 17 commandé par un moteur, non représenté, et guidée par un pignon 18 tournant librement autour de son axe. La liaison entre les mâchoires 12 et la couronne dentée 16 s'effectue par l'intermédiaire d'ergots 19 fixés à la couronne dentée et coopérant avec des lumières 20 prévues dans les mâchoires 12.

Les organes mobiles 9 susdits sont agencés pour se déplacer suivant la flèche 21 pour adapter la zone de fixation 3 au noeud de vibrations du dispositif 1, qui se déplace, suite à l'usure de l'outil du dispositif, dans le sens de cette flèche 21. Dans ce cas particulier, la séquence d'opérations est la suivante : les mâchoires 7, qui font partie des organes 7' fixes par rapport au support 2, enserrent le dispositif 1 pour l'immobiliser suivant son axe 5 et empêcher sa rotation autour de cet axe, les pièces 30 des moyens de blocage 10 sont écartées des mâchoires 12, ces dernières sont écartées du dispositif 1 tout en conservant leur zone 13 taraudée dans une position telle qu'elle peut coopérer avec la zone filetée 14 du dispositif 1, les mâchoires 12 sont entraînées par la couronne dentée 16 suivant la flèche 21 jusqu'au momemnt où elles sont situées en regard de la position du noeud de vibrations, les mâchoires 12 sont alors ramenées vers le dispositif 1 pour les bloquer par rapport à ce dernier, les mâchoires 7 libèrent le dispositif 1 et les moyens de blocage 10 sont ramenés au contact des mâchoires 12 pour les appliquer sur la couronne dentée 16 qui, elle-même,sera appliquée sur le support 2. Pour éviter un choc trop brutal de ces éléments avec le support 2 lors de la libération du dispositif 1 par les mâchoires 7, on peut prévoir un élément élastique compressible interposé entre au moins la couronne dentée 16 et le support 2.

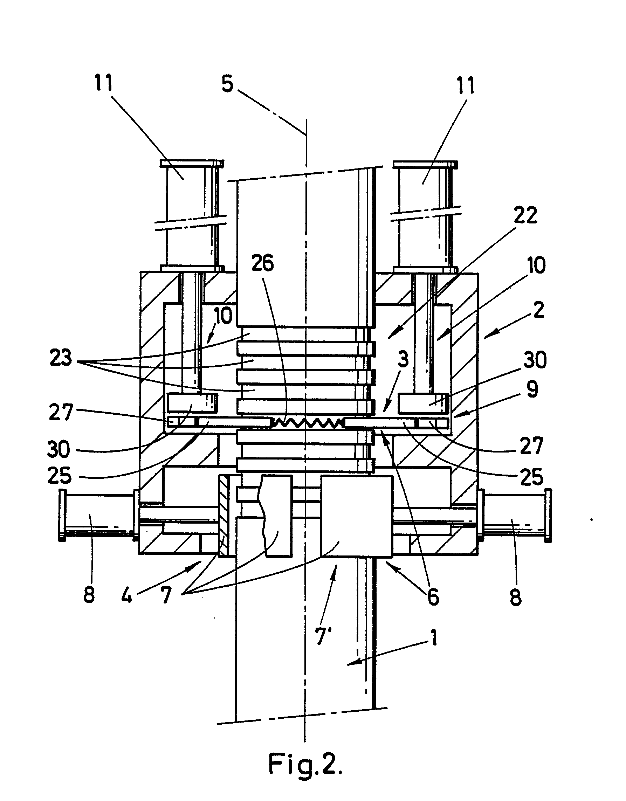

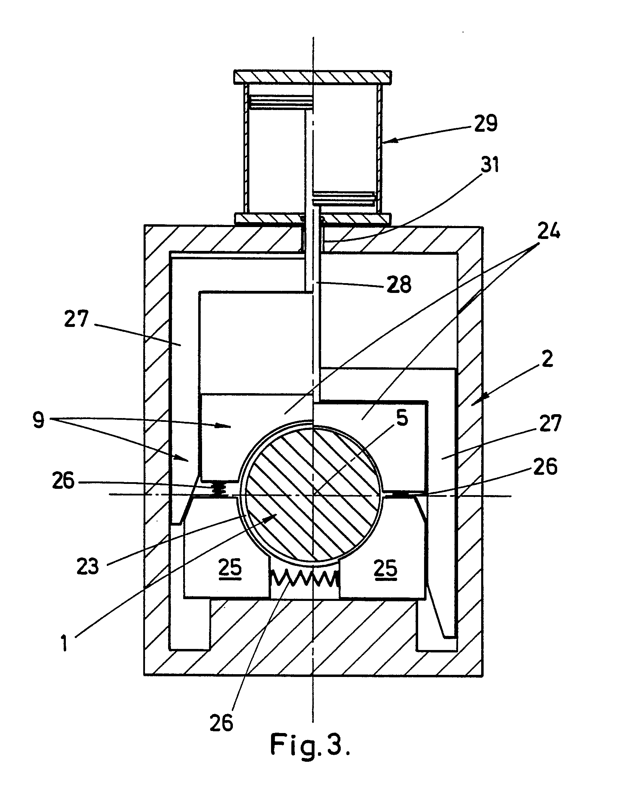

Dans la forme de réalisation de l'installation représentée aux figures 2 et 3, les organes 9, qui sont mobiles par rapport au support 2 dans les deux sens suivant l'axe 5, sont constitués par un jeu de mâchoires 24 et 25 guidées dans le support 2 et entre lesquelles sont prévus des ressorts 26 agencés pour normalement écarter ces mâchoires les unes des autres et par un tiroir de commande 27 des mâchoires 24 et 25 guidé dans le support 2 et porté par la tige 28 d'un vérin 29, guidé sur le support 2 pour pouvoir se déplacer, grâce à une lumière 31 ménagée dans ce dernier, suivant une direction parallèle à l'axe (5) du dispositif vibrateur (1) et ce, sans rotation autour de l'axe 5 de celui-ci. Les mâchoires 24 et 25, le tiroir de commande 27 et le vérin 29 sont agencés pour que les mâchoires 24 et 25 puissent occuper deux positions extrêmes, une première position extrême où elles sont introduites dans les gorges annulaires 23 et une seconde position extrême où elles sont dégagées desdites gorges 23. Grâce aux ressorts 26 et à la configuration des mâchoires 24 et 25, celles-ci, lorsqu'elles occupent leur première position extrême (position d'immobilisation du dispositif vibrateur), n'entrent pas en contact, de sorte que, lorsqu'elles sont introduites dans les gorges annulaires 23, l'axe 5 du dispositif vibrateur 1 se trouve toujours dans la même position. Lorsque les mâchoires 24 et 25 occupent cette première position extrême, les pièces 30 des moyens de blocage 10, commandées par les vérins 11, viennent prendre appui sur les mâchoires 24 et 25 et le tiroir 27 pour les appliquer sur le support 2.

Le mode de fonctionnement des moyens de fixation 6 de l'installation illustrée aux figures 2 et 3 est analogue à celui des moyens de fixation 6 de l'installation illustrée à la figure 1 et qui a été décrit ci-dessus.

Il doit être entendu que l'invention n'est nullement limitée aux formes de réalisation décrites et que bien des modifications peuvent être apportées à ces dernières sans sortir du cadre du présent brevet.

## Revendications

1. Procédé d'utilisation d'un dispositif vibrateur électroacoustique (1) monté sur un support (2) et destiné notamment à l'usinage et à la soudure de pièces, caractérisé en ce qu'il consiste à modifier, en cours d'utilisation du dispositif vibrateur électroacoustique, la position de ce dernier par rapport à son support pour que la zone (3) de fixation dudit dispositif (1) sur ce support (2) coïncide sensiblement avec un noeud de vibrations.

2. Procédé suivant la revendication 1, caractérisé en ce qu'on effectue la modification de la position du dispositif vibrateur électroacoustique (1) d'une manière discontinue, cette modification étant effectuée lors d'une variation prédéterminée de la fréquence de vibration.

3. Procédé suivant la revendication 2, caractérisé en ce que, pour effectuer la modification de position susdite, on immobilise le dispositif vibrateur électroacoustique (1) en un endroit (4) situé en dehors de sa zone (3) de fixation précitée à son support, on rend cette zone (3) de fixation mobile par rapport au dispositif vibrateur (1) avec ou sans dégagement opérationnel par rapport à celui-ci, on provoque un déplacement relatif de la zone (3) de fixation et du dispositif (1) suivant l'axe (5) de ce dernier, de manière à faire coïncider sensiblement leur position respective avec la nouvelle position du noeud de vibrations, on immobilise à nouveau la zone (3) de fixation par rapport au dispositif vibrateur (1), on libère ce dernier à l'endroit (4) situé en dehors de sa zone (3) de fixation.

4. Procédé suivant l'une quelconque des revendications 1 à 3, caractérisé en ce qu'on détermine la fréquence de référence correspondant à la fixation du dispositif vibrateur (1) à l'endroit d'un noeud de vibrations de celui-ci, en cours d'utilisation du dispositif, on analyse la fréquence de vibration de résonance, on compare cette dernière fréquence à la fréquence de référence et on utilise le résultat de la comparaison pour modifier la zone (3) de fixation du dispositif vibrateur électroacoustique (1) par rapport à son support (2) pour que cette zone (3) coïncide sensiblement avec un noeud de vibrations.

5. Procédé suivant la revendication 4, caractérisé en ce qu'on analyse le circuit électrique équivalent du dispositif vibrateur (1) pour en déterminer l'impédance minimum, on enregistre la fréquence correspondante qui constitue la fréquence de référence, on utilise cette dernière pour effectuer un déplacement de la zone (3) de fixation vers le noeud de vibrations correspondant et on la maintient fixe par rapport à ce noeud.

6. Installation pour la mise en oeuvre du procédé suivant l'une quelconque des revendications 1 à 5, caractérisée en ce qu'elle comprend un support (2) portant un dispositif vibrateur électroacoustique (1), des moyens de fixation (6) dudit dispositif (1) sur le support (2) qui sont agencés de manière à permettre une modification de position relative du dispositif vibrateur par rapport à son support et des moyens pour analyser la fréquence de vibration du dispositif vibrateur (1) et pour piloter la position du dispositif vibrateur (1) par rapport à son support (2).

7. Installation suivant la revendication 6, caractérisé en ce que les moyens de fixation (6) susdits comprennent des organes (7') fixes, par rapport au support (2), agencés pour immobiliser temporairement le dispositif vibrateur (1) par rapport audit support (2) lors d'une modification de position susdite et des organes (9) mobiles, par rapport au support (2), agencés pour se déplacer par rapport à ce dernier et par rapport au dispositif vibrateur (1) pour venir se placer sensiblement à l'endroit d'un noeud de vibrations.

8. Installation suivant la revendication 7, caractérisée en ce que les moyens de fixation (6) susdits comprennent des moyens de blocage (10) des organes mobiles (9) précités sur le support (2), lorsque ces organes mobiles (9) occupent leur position correspondant à la position de travail du dispositif vibrateur électroacoustique (1).

9. Installation suivant la revendication 7, caractérisée en ce que les organes (7') susdits, fixes par rapport au support (2) et agencés pour immobiliser temporairement le dispositif vibrateur (1), suivant une direction parallèle à son axe (5) et en rotation autour de cet axe, par rapport audit support (2), comprennent au moins deux mâchoires (7) profilées de manière à prendre appui sur la face externe du dispositif vibrateur (1) et fixées chacune à l'extrémité de la tige de piston d'un vérin (8), assemblé au support (2) et dont l'axe est perpendiculaire à l'axe (5) du dispositif vibrateur (1), les axes des vérins (8) étant confondus, tandis que les organes (9) susdits, mobiles par rapport au support (2), sont constitués, d'une part, par au moins deux mâchoires (12) mobiles perpendiculairement à l'axe (5) du dispositif vibrateur (1) et suivant une direction parallèle à cet axe, commandées par des vérins (15) et dont la zone (13) destinée à coopérer avec le dispositif vibrateur (1) est taraudée tandis que la zone (14) du dispositif (1) avec laquelle ces mâchoires (12) coopèrent est filetée, la course des vérins (15) étant réglée pour que, lorsque lesdites mâchoires (12) libèrent le dispositif vibrateur (1), le filet de la zone taraudée (13) susdite soit toujours engagé dans le filet de la zone filetée (14) du dispositif et, d'autre part, par des moyens d'entraînement desdites mâchoires (12) en rotation autour de l'axe (5) du dispositif vibrateur (1) comprenant une couronne dentée (16) coaxiale à ce dernier, au moins un pignon d'entraînement (17) de la couronne dentée (16) agencé sur le support (2) et une liaison par ergots (19) de la couronne dentée (16) et desdites mâchoires (12).

10. Installation suivant la revendication 7, caractérisée en ce que le dispositif vibrateur (1) présente une zone (22) munie de gorges annulaires (23) régulièrement réparties suivant son axe (5), les organes (6) susdits, fixes par rapport au support (2) et agencés pour immobiliser temporairement le dispositif vibrateur (1), suivant une direction parallèle à son axe (5) et en rotation autour de cet axe, par rapport audit support (2), comprenant au moins deux mâchoires (7) profilées de manière à prendre appui sur la face externe du dispositif vibrateur (1) et fixées chacune à l'extrémité de la tige de piston d'un vérin (8), assemblé au support (2) et dont l'axe est perpendiculaire à l'axe (5) du dispositif vibrateur (1), les axes des vérins (8) étant confondus, tandis que les organes (9) susdits, mobiles par rapport au support (2), sont constitués par un jeu de mâchoires (24 et 25) guidées dans le support (2) et entre lesquelles sont prévus des ressorts (26) agencés pour normalement écarter ces mâchoires les unes des autres et par un tiroir de commande (27) des mâchoires (24 et 25), guidé dans le support (2) et porté par la tige (28) d'un vérin (29) guidé sur le support (2) pour pouvoir se déplacer suivant une direction parallèle à l'axe (5) du dispositif vibrateur (1), les mâchoires (24 et 25), le tiroir de commande (27) et le vérin (29) étant agencés pour que les mâchoires (24 et 25) puissent occuper deux positions extrêmes, une première position extrême où elles sont introduites dans les gorges annulaires (23) susdites et une seconde position extrême où elles sont dégagées desdites gorges (23).

11. Installation suivant la revendication 10, caractérisée en ce que les moyens de blocage (10) susdits sont constitués par des pièces (30), commandées chacune par un vérin (11) fixé au support (2) et agencées pour prendre appui, soit sur les mâchoires (12) susdites, soit sur le jeu de mâchoires (24 et 25) et le tiroir de commande (27), pour les immobiliser par rapport au support (2) lorsque les mâchoires mobiles (12) et le jeu de mâchoires (24 et 25) occupent leur position d'immobilisation du dispositif vibrateur (1).

Fig.1.

Fig.2.

Fig.3.